# EUROPÄISCHE PATENTANMELDUNG

(11) **EP 4 094 873 A1**
(43) Veröffentlichungstag der Anmeldung: **30.11.2022**
(21) Anmeldenummer: 21175756.2
(22) Anmeldetag: 25.05.2021
(51) Int. Cl.: B23K 9/04, B23K 9/16, B23K 9/29, B23K 9/32

(54) **VERFAHREN UND SCHLEPPGASDÜSE ZUR BESTRÖMUNG EINES SCHWEISSBEREICHS EINES WERKSTÜCKS**

(71) Anmelder: FRONIUS INTERNATIONAL GmbH, 4643 Pettenbach (AT)
(72) Erfinder: SCHÜTZENBERGER, Andreas, 4643 Pettenbach (AT); LEONHARTSBERGER, Andreas, 4643 Pettenbach (AT); HAUSER, Patrick, 4643 Pettenbach (AT); MAYER, Manuel, 4643 Pettenbach (AT); GRUNWALD, Rick, 4643 Pettenbach (AT); HABERLER, Wolfgang, 4643 Pettenbach (AT)
(74) Vertreter: SONN Patentanwälte OG

(57) **Zusammenfassung**

Die Erfindung betrifft ein Verfahren und eine Schleppgasdüse (1) zur Beströmung eines Schweißbereichs (Y) eines Werkstücks (W) entlang einer Schweißbahn (X) mit zumindest einem Fluid (Fᵢ) während eines Schweißprozesses, wobei das zumindest eine Fluid (Fᵢ) über zumindest einen Einlass (Eᵢ) und eine Vielzahl von Kanälen mit Öffnungen auf den Schweißbereich (X) geströmt wird. In der Schleppdüse (1) werden die Öffnungen der Kanäle in zumindest zwei Sektoren (Sᵢ) aufgeteilt, und es wird zumindest ein Strömungsparameter , allenfalls auch eine Eigenschaft des zumindest einen Fluids (Fᵢ) jedes Sektors (Sᵢ) individuell geregelt.

## Beschreibung

Die Erfindung betrifft ein Verfahren zur Beströmung eines Schweißbereichs eines Werkstücks entlang einer Schweißbahn mit zumindest einem Fluid während eines Schweißprozesses, wobei das zumindest eine Fluid über zumindest einen Einlass und eine Vielzahl von Kanälen mit Öffnungen auf den Schweißbereich geströmt wird.

Die Erfindung betrifft weiters eine Schleppgasdüse zur Beströmung eines Schweißbereichs eines Werkstücks entlang einer Schweißbahn mit zumindest einem Fluid während eines Schweißprozesses, mit einem Gehäuse, zumindest einem Einlass für das zumindest eine Fluid und eine Vielzahl von Kanälen mit Öffnungen, über welche das zumindest eine Fluid auf den Schweißbereich strömt.

Bei den meisten Schweißverfahren wird zur Erhöhung der Stabilität des Schweißprozesses ein Schutzgas verwendet, welches über die Gasdüse zum Schutz des Lichtbogens zugeführt wird. Dieses Schutzgas wird auch als primäres Schutzgas bezeichnet. Zum Schutz der nachlaufenden Schmelze vor Luftzutritt und einer Oxidation durch Sauerstoff, insbesondere beim Auftragsschweißen und beim sogenannten Arc-DED Verfahren (Arc-Direct Energy Deposition), werden teilweise Schleppgasdüsen der gegenständlichen Art verwendet, über die zusätzlich Schutzgas über den Schweißbereich strömt, um eine Reaktion des geschmolzenen Materials mit dem Sauerstoff in der umgebenden Luft zu verhindern und die Schweißqualität zu verbessern. Bei derartigen Schleppgasdüsen verwendetes Schutzgas wird auch als sekundäres Schutzgas bezeichnet. Speziell bei einer Bearbeitung von Werkstücken aus legierten Stählen, Aluminiumlegierungen oder Titan, etc. ist die Verwendung eines sekundären Schutzgases für die Erzielung guter Schweißergebnisse erforderlich, da diese Materialien stark mit Sauerstoff reagieren. Beispielsweise oxidiert Titan aufgrund seiner hohen Affinität zu Sauerstoff bei Temperaturen über 300°C, weshalb hier eine Schutzatmosphäre erforderlich ist. Dafür kommt beispielsweise Argon zur Anwendung, das auch häufig als primäres Schutzgas zum Schutz des Lichtbogens während des Schweißprozesses verwendet wird. Unter den Begriff "während des Schweißprozesses" fallen selbstverständlich auch die Phasen vor dem Schweißprozess bzw. vor dem Zünden des Lichtbogens, dem sogenannten Vorlauf, während dem eine Beströmung zur Verhinderung einer Oxidation vor dem Schweißbeginn stattfinden kann, die Phasen nach dem Schweißprozess, dem sogenannten Nachlauf, während dem eine Abkühlung des Werkstücks stattfindet, sowie allfällige Pausen zwischen einzelnen Schweißphasen.

Bei kleineren Bauteilen aus den oben genannten Materialien kann der Schweißprozess auch in Kammern vorgenommen werden, um die Schweißnaht oder den Schweißbereich vor Luftzutritt und Oxidation zu schützen. Das Schweißen in einer Kammer ist allerdings sehr aufwendig und auch mit einem sehr hohen Verbrauch an Schutzgas verbunden. Darüber hinaus ist das Schweißen größerer Werkstücke, wie zum Beispiel von Flugzeug-Komponenten, in Kammern nicht möglich oder mit einem sehr großen Aufwand verbunden.

Über Schleppgasdüsen wird das sekundäre Schutzgas in geeigneter Weise auf den nachlaufenden Schweißbereich aufgebracht, bis das Werkstück bzw. der Schweißbereich unterhalb der Temperatur, bei welcher eine Reaktion des jeweiligen Materials mit Sauerstoff stattfindet, abgekühlt ist. Beispielsweise beschreibt die WO 2020/234329 A1 eine Schleppgasdüse, welche sich durch eine Vielzahl parallel angeordneter Gaskanäle jeweils mit einer Höhe, welche zumindest dem Sechsfachen des hydraulischen Durchmessers entspricht. Dadurch kann eine optimale Strömung und Schutzgasverteilung erzielt und eine Laminarisierung der Schutzgasströmung innerhalb der Gaskanäle bei gleichzeitig relativ geringem Verbrauch an Schutzgas erreicht werden. Somit wird der von der Schleppgasdüse abgedeckte Schweißbereich optimal vor Luftzutritt geschützt und es resultiert eine Schweißnaht bzw. eine Werkstückoberfläche mit optimalen Eigenschaften und höchster Qualität.

Neben einem Schutzgas kann der Schweißbereich auch mit einer Flüssigkeit oder einer Mischung eines Gases und einer Flüssigkeit beströmt werden, um den Schweißbereich vor Sauerstoff zu schützen und allenfalls zu kühlen. Daher wird im Folgenden der Begriff Fluid verwendet, der Gase, Flüssigkeiten und Mischungen von Gasen und Flüssigkeiten umfasst.

Nachteilig bei bisherigen Verfahren und Schleppgasdüsen zur Beströmung eines Schweißbereichs eines Werkstücks entlang einer Schweißbahn mit zumindest einem Fluid, insbesondere einem Schutzgas, ist der hohe Verbrauch der Fluide zum Schutz oder zur Kühlung des Schweißbereichs und die damit verbundenen hohen Kosten. Insbesondere Schutzgase, wie zum Beispiel Argon, welche eine Oxidation der Oberfläche des Werkstücks verhindern sollen, sind relativ teuer.

Die Aufgabe der vorliegenden Erfindung besteht darin, ein oben genanntes Verfahren und eine Schleppgasdüse zur Beströmung eines Schweißbereichs eines Werkstücks entlang einer Schweißbahn mit zumindest einem Fluid zu schaffen, durch welche der Verbrauch an Fluid zum Schutz und zur Kühlung des Schweißbereichs minimiert und somit die Kosten gering gehalten werden können. Der Schweißbereich soll dennoch optimal vor Luftzutritt geschützt werden, sodass eine möglichst hohe Schweißqualität resultiert. Nachteile bekannter Verfahren und Schleppgasdüsen der gegenständlichen Art sollen verhindert oder zumindest reduziert werden.

Gelöst wird die erfindungsgemäße Aufgabe durch ein oben genanntes Verfahren zur Beströmung eines Schweißbereichs eines Werkstücks, wobei die Öffnungen der Kanäle in zumindest zwei Sektoren aufgeteilt werden, und zumindest ein Strömungsparameter des zumindest einen Fluids jedes Sektors individuell geregelt wird. Dadurch, dass die Beströmung des Schweißbereichs des Werkstücks mit dem Fluid, insbesondere einem Schutzgas oder einer Kühlflüssigkeit, in Sektoren aufgeteilt und die Strömungsparameter des Fluids jedes Sektors individuell geregelt wird, kann das zumindest eine Fluid gezielter eingesetzt und somit der Verbrauch an Fluid deutlich reduziert werden. Im Gegensatz zu herkömmlichen Verfahren, bei welchen der gesamte von der Schleppgasdüse abgedeckte Schweißbereich des Werkstücks mit dem Fluid beströmt wird, kann beim erfindungsgemäßen Verfahren die Beströmung des Schweißbereichs des Werkstücks sektorweise geregelt werden und somit nur die für die Verhinderung einer Oxidation bzw. Kühlung der Werkstückoberfläche notwendige Menge an Fluid verwendet werden. Als Fluid kann auch ein Kühlfluid eingesetzt werden, wodurch eine raschere Abkühlung und auch Unterschreitung einer bestimmten Temperatur des Materials des Werkstücks erzielt werden kann und somit der Verbrauch des benötigten Schutzgases reduziert werden kann. Als Kühlfluid kann insbesondere eine Kühlflüssigkeit, vorzugsweise Wasser, verwendet werden, wobei die Art der Kühlflüssigkeit an das Material des Werkstücks angepasst werden kann. Beim Verdampfen der Kühlflüssigkeit kann dabei das entstehende Gas auch eine Schutzfunktion für die Oberfläche des Werkstücks ausbilden. Darüber hinaus kann auch eine raschere Absenkung der Werkstücktemperatur unter die Temperatur, bei welcher eine Reaktion mit dem Luftsauerstoff stattfindet, erreicht werden. Dadurch resultiert eine höhere Schweißqualität aufgrund einer optimalen Ausbildung des Gefüges des Werkstücks. Aufgrund der gezielten Steuerung der Strömungsparameter des Fluids können bestimmte Temperatur-Zeit-Abkühlprofile für eine gewünschte Abkühlung und somit ein bestimmtes Gefüge eingestellt werden. Beispielsweise kann dadurch ein sogenanntes Widmannstätten-Gefüge erzielt werden, welches im Flugzeugbau gefordert wird. Unter Strömungsparametern werden Parameter verstanden, welche die Strömung des Fluids betreffen, insbesondere die Strömungsmenge, das Strömungsvolumen oder die Strömungsgeschwindigkeit des Schutzgases, der Kühlflüssigkeit oder eines Gemischs aus Gas und Flüssigkeit. Die Regelung der Strömungsparameter des zumindest einen Fluids jedes Sektors kann relativ einfach durch die sektorweise Regelung mittels Ventilen oder Durchflussreglern in Zuleitungen erfolgen und somit mit relativ geringem Aufwand realisiert werden.

Wenn neben dem Strömungsparameter des zumindest einen Fluids auch zumindest eine Eigenschaft des zumindest einen Fluids individuell geregelt wird, können weitere Vorteile erzielt werden. Unter den Begriff der Eigenschaft des Fluids fällt beispielsweise die Art des Fluids, die Temperatur des Fluids oder die Zusammensetzung des Fluids, beispielsweise die Zusammensetzung einer Mischung mehrerer Gase oder die Zusammensetzung einer Mischung eines Gases und einer Flüssigkeit. Wenn auch die Eigenschaften des zumindest einen Fluids jedes Sektors individuell geregelt wird, kann der Schutz und die Kühlung des Schweißbereichs des Werkstücks noch gezielter auf den jeweiligen Herstellungsprozess abgestimmt werden und der Verbrauch an Fluid gesenkt bzw. die Schweißqualität weiter verbessert werden.

Wenn zumindest ein Strömungsparameter und bzw. oder zumindest eine Eigenschaft des zumindest einen Fluids jedes Sektors in Abhängigkeit zumindest einer Temperatur des Schweißbereichs des Werkstücks individuell geregelt wird, kann der Verbrauch des Fluids noch besser an die tatsächlichen Gegebenheiten angepasst werden. Insbesondere, wenn eine bestimmte Temperatur des Materials des Werkstücks unterschritten wurde, kann auf das Beströmen mit dem Fluid verzichtet oder die Art des Fluids geändert werden, wodurch weitere Kosten gespart werden können. Beispielsweise liegt die Temperatur von Titan bei 300°C, oberhalb welcher Temperatur ein Schutz des Materials mit Schutzgasen, wie zum Beispiel Argon, zur Verhinderung einer Oxidation erforderlich ist. Unterhalb dieser Temperatur kann beispielsweise ein anderes Gas, wie zum Beispiel Druckluft, Kohlendioxid, Stickstoff oder eine Flüssigkeit, beispielsweise Wasser verwendet werden, um die Temperatur des Schweißbereichs noch weiter abzukühlen. Da Druckluft, Kohlendioxid, Stickstoff und Wasser wesentlich billiger als Argon sind, können somit die Kosten an Verbrauchsmaterialien deutlich gesenkt werden. Zudem ist beispielsweise durch die Verwendung von Wasser, beim Unterschreiten der Oxidationstemperatur, eine schnellere Abkühlung des Bauteils möglich. Dadurch kann zusätzlich eine kürzere Fertigungszeit erreicht werden.

Dabei kann die zumindest eine Temperatur des Schweißbereichs des Werkstücks mit zumindest einem Temperatursensor gemessen werden, um in Abhängigkeit der Temperatur die Strömungsparameter und bzw. oder Eigenschaften des zumindest einen Fluids jedes Sektors regeln zu können. Unter den Begriff des Temperatursensors fallen alle möglichen kontaktbehafteten oder kontaktlosen Fühler, wie zum Beispiel Thermoelemente, Halbleiterelemente (Heißleiter, Kaltleiter), pyroelektrische Sensoren, mechanische Sensoren (Dehnungsmessstreifen), magnetische Temperatursensoren bis hin zu optischen Temperatursensoren und Wärmebildkameras.

Neben oder zusätzlich zu einer physikalischen Messung der Temperatur kann zumindest eine Temperatur des Schweißbereichs des Werkstücks auch durch Simulation oder Parameterkalkulation abgeschätzt werden. Dabei kann mit Hilfe geeigneter Softwareanwendungen der Temperaturverlauf einer Nachbildung des Werkstücks während der Herstellung virtuell bzw. rechnerisch ermittelt und abgeschätzt werden und die Regelung der Strömungsparameter und bzw. oder Eigenschaften des zumindest einen Fluids jedes Sektors in Abhängigkeit von dieser simulierten Temperatur eingestellt und geregelt werden. Auch durch entsprechende Vermessung oder Abtastung fertiger Werkstücke, beispielsweise mit optischen Verfahren können Parameter für die Regelung festgelegt werden.

Schließlich kann die zumindest eine Temperatur des Schweißbereichs des Werkstücks auch über die beim Schweißprozess in das Werkstück eingebrachte Energie bestimmt werden. Bei dieser indirekten Ermittlung oder Abschätzung der Temperatur des Werkstücks wird die eingebrachte Energie über den Schweißstrom und die Schweißspannung erfasst und daraus auf die ungefähre Temperatur rückgeschlossen. Dabei wird insbesondere auch die Geometrie des herzustellenden oder zu bearbeitenden Werkstücks sowie die Menge und das Material des eingesetzten Schweißmaterials berücksichtigt. Diese Methode ist zwar nicht so genau wie die physische Messung der Temperatur, erfordert dafür keine eigenen Sensoren oder Simulationsverfahren.

Vorteilhafterweise wird bei Unterschreitung oder Überschreitung einer vorgegebenen Grenztemperatur zumindest ein Strömungsparameter und bzw. oder zumindest eine Eigenschaft des zumindest einen Fluids zumindest eines Sektors geändert. Somit können Grenzwerte für die Temperatur festgelegt werden unterhalb oder oberhalb welcher bestimmte Strömungsparameter und bestimmte Eigenschaften für die Fluide gelten, welche dann in Abhängigkeit der Temperatur eingestellt werden. Beispielsweise kann bei der Temperatur eines Materials eines Werkstücks die Art des verwendeten Schutzgases als Fluid geändert werden (unterhalb der sogenannten Dissoziationstemperatur des verwendeten inerten Gases - z.B. Argon - kann ein günstigeres nicht inertes Gas - z.B. Kohlendioxid CO₂ - verwendet werden). Ebenso kann der Volumenstrom des verwendeten Fluids in Abhängigkeit des Temperaturverlaufs am Werkstück bzw. durch Definition von zumindest einer Grenztemperatur geändert bzw. geregelt werden.

Ebenso kann zumindest ein Strömungsparameter und bzw. oder zumindest eine Eigenschaft des zumindest einen Fluids jedes Sektors in Abhängigkeit eines vorgegebenem Temperatur-Zeit-Abkühlprofils des Werkstücks individuell geregelt werden. Dadurch kann die Ausbildung des Gefüges des Werkstücks noch besser eingestellt und in seiner Ausführung, Art und Feinheit beeinflusst werden.

Gemäß einem weiteren Merkmal der Erfindung ist vorgesehen, dass zumindest ein Strömungsparameter und bzw. oder zumindest eine Eigenschaft zumindest eines Fluids zumindest eines Sektors in Abhängigkeit der Geometrie der Schweißbahn geregelt wird. Dadurch kann der Verbrauch an Fluid sektorweise an den Verlauf der Schweißbahn angepasst werden. Verläuft die Schweißbahn gerade, so wird der die gerade Schweißbahn beim Herstellungsprozess abdeckende Sektor der Schleppgasdüse aktiviert und in diesem Sektor die größte Menge an Fluid auf die Oberfläche des Werkstücks strömen. Wenn die Schweißbahn in einer Kurve oder Ecke verläuft, werden andere Sektoren angesteuert. Die Daten über die Geometrie der Schweißbahn sind der Schweißvorrichtung bekannt und müssen vor Durchführung des Schweißprozesses entsprechend an die Einrichtung zur Regelung der Strömungsparameter und Eigenschaften des zumindest einen Fluids übermittelt werden. Beispielsweise können die Daten des Schweißroboters dazu herangezogen werden.

Ebenso kann zumindest ein Strömungsparameter und bzw. oder zumindest eine Eigenschaft zumindest eines Fluids zumindest eines Sektors in Abhängigkeit der Geometrie des Werkstücks geregelt werden. Da auch die Geometrie des herzustellenden Werkstücks großen Einfluss auf den Temperaturverlauf des Werkstücks während des Schweißprozesses hat, ist eine Berücksichtigung bei der Regelung des Strömungsparameters oder der Eigenschaft des zumindest einen Fluids jedes Sektors vorteilhaft.

Zumindest ein Strömungsparameter und bzw. oder zumindest eine Eigenschaft zumindest eines Fluids zumindest eines Sektors kann auch in Abhängigkeit des Schweißprozesses geregelt werden. Es kann ein Lichtbogenschweißverfahren mit geringem Wärmeeintrag, beispielsweise ein CMT (Cold Metal Transfer)-Prozess eingestellt sein, somit reicht beispielsweise Luft als Fluid aus. Ebenso kann ein Lichtbogenschweißverfahren mit einem hohen Wärmeintrag, beispielsweise ein Puls-Schweißprozess eingestellt sein, bei dem eine stärkere Kühlung notwendig ist.

Gelöst wird die erfindungsgemäße Aufgabe auch durch eine oben genannte Schleppgasdüse, bei der die Kanäle mit den Öffnungen in zumindest zwei Sektoren aufgeteilt sind, mit zumindest einem Einlass für zumindest ein Fluid, welche Sektoren zur individuellen Regelung zumindest eines Strömungsparameters des zumindest einen Fluids jedes Sektors ausgebildet ist. Die Kanäle und Öffnungen der Schleppgasdüse sind also in mehreren Sektoren aufgeteilt, wodurch eine individuelle Regelung der Strömungsparameter des zumindest einen Fluids jedes Sektors ermöglicht wird. Die individuelle Regelung kann durch einzelne Einlässe für zumindest ein Fluid für jeden Sektor oder auch einzelne Ventile in Einlassleitungen oder Zwischenleitungen, welche die Kanäle der Sektoren mit dem Fluid speisen, gebildet sein. Insbesondere, wenn die Schleppgasdüse durch ein 3D-Druckverfahren hergestellt wird, lassen sich diese Aufteilung der Kanäle in mehrere Sektoren und die notwendigen Kanäle und Einlässe relativ leicht und kostengünstig herstellen. Zu den weiteren Vorteilen wird auf die obige Beschreibung des Verfahrens verwiesen.

Die Sektoren können in Form von miteinander verbindbaren Modulen aufgebaut sein. Durch einen solchen modularen Aufbau der Schleppgasdüse wird eine höhere Flexibilität erzielt. So können für bestimmte Herstellungsverfahren geeignete Schleppgasdüsen durch entsprechende Verbindung der Module aufgebaut und eine gewünschte Anzahl und Anordnung an Sektoren gebildet werden. Die Module können beispielsweise miteinander verschraubt oder auch werkzeuglos über Rastverbindungen miteinander verbunden werden. Auch unlösbare Schweiß-, Löt- oder Klebeverbindungen sind denkbar.

Je nach Anwendung können die Sektoren symmetrisch, beispielsweise kreissymmetrisch, oder auch asymmetrisch angeordnet sein. Die Anzahl und Anordnung der Sektoren der Schleppgasdüse wird an die Geometrie und den Verlauf der Schweißbahn, die Geometrie des Werkstücks sowie die verwendeten Materialien des Werkstücks entsprechend angepasst werden. Bei besonders oxidationsempfindlichen Materialien wird auch die Schleppgasdüse auch größer ausgeführt werden müssen, da das Werkstück länger vor Luftzufuhr geschützt und gekühlt werden muss, bevor das Material erstarrt ist und keine Gefahr eines Qualitätsverlusts mehr gegeben ist.

Wenn an der Schleppgasdüse zumindest ein Temperatursensor zur Messung zumindest einer Temperatur des Schweißbereichs des Werkstücks vorgesehen ist, kann die Regelung der Strömungsparameter und Eigenschaften des zumindest einen Fluids noch weiter verbessert werden.

Der zumindest eine Temperatursensor kann in geeigneter Weise zwischen den Öffnungen der Kanäle angeordnet sein. Über entsprechende Leitungen wird der zumindest eine Temperatursensor mit der Regelungseinrichtung, beispielsweise der Steuereinrichtung der Schweißstromquelle verbunden. Auch eine drahtlose Verbindung ist denkbar, wobei entsprechende Sendeeinrichtungen an der Schleppgasdüse angeordnet sein können, welche die Signale der Temperatursensoren an die jeweiligen Einrichtungen überträgt.

Wenn zumindest eine Kühlfluidleitung mit zumindest einer Mündung zum Aufbringen eines Kühlfluids auf den Schweißbereich des Werkstücks vorgesehen ist, kann zusätzlich zum Fluid, mit dem das Werkstück beströmt wird, eine raschere Abkühlung und auch Unterschreitung der kritischen Temperatur des Materials des Werkstücks erzielt werden und somit der Verbrauch der oberhalb kritischer Temperaturen notwendigen teureren Schutzgase weiter reduziert werden. Als Kühlfluid wird insbesondere eine Kühlflüssigkeit, vorzugsweise Wasser, verwendet.

Bei Verwendung einer Kühlflüssigkeit ist es von Vorteil, wenn an der zumindest einen Mündung eine Düse, insbesondere eine Zerstäuberdüse, Flachdüse, Kegeldüse oder dgl. angeordnet ist. Dadurch kann die Kühlflüssigkeit in besonders geeigneter Weise auf die heiße Oberfläche des Werkstücks aufgebracht werden und diese kühlen.

Wenn eine vorzugsweise schwenkbare Einrichtung zur Befestigung der Schleppgasdüse an einem Schweißbrenner vorgesehen ist, kann eine leichte Verbindung der Schleppgasdüse mit dem Schweißbrenner hergestellt werden. Durch die Schwenkbarkeit kann die Schleppgasdüse bei Nichtbenutzung einfach weggeschwenkt werden oder eine schnelle Anpassung der Lage der Schleppgasdüse in Bezug auf den Schweißbereich bzw. das Werkstück vorgenommen werden. Zur raschen Fixierung der Schleppgasdüse in Bezug auf den Schweißbrenner können entsprechende Fixierungselemente vorgesehen sein, welche insbesondere eine werkzeuglose manuelle Fixierung und Lösung erlauben.

Vorzugsweise sind das Gehäuse, der zumindest eine Einlass für jedes Fluid, die Kanäle mit den Öffnungen und allenfalls die zumindest eine Kühlfluidleitung einteilig und vorzugsweise in einem 3D-Druckverfahren hergestellt. Dadurch kann die Schleppgasdüse rasch und kostengünstig hergestellt werden.

Das Gehäuse, der zumindest eine Einlass für jedes Fluid, die Gaskanäle mit den Öffnungen und allenfalls die zumindest eine Kühlfluidleitung werden beispielsweise aus einer Aluminium-Legierung hergestellt. Auch Kupfer oder eine Kupfer-Legierung eignet sich zur Herstellung der Schleppgasdüse.

Die Kanäle der Schleppgasdüse weisen vorzugsweise runden oder regelmäßig polygonen Querschnitt, vorzugsweise quadratischen oder sechseckigen Querschnitt auf. Durch eine solche Gestaltung folgt eine regelmäßige Wandstärke zwischen den Gaskanälen, was zu einer gleichmäßigen Wärmeabfuhr führt und herstellungsmäßig Vorteile bietet.

Das Gehäuse kann im Wesentlichen rechteckige Grundfläche und die Sektoren ebenfalls rechteckige Grundfläche aufweisen. Eine allfällige Einrichtung zur Befestigung des Schweißbrenners ist dabei vorzugsweise an einer Breitseite des rechteckigen Gehäuses angeordnet. Diese Variante bietet Vorteile insbesondere bei im Wesentlichen geraden Schweißbahnen.

Alternativ dazu kann das Gehäuse auch im Wesentlichen runde Grundfläche aufweisen und können die Sektoren im Wesentlichen kreissektorförmige Grundfläche aufweisen. Dabei ist die allfällige Einrichtung zur Befestigung des Schweißbrenners vorteilhafterweise im Wesentlichen in der Mitte des Gehäuses angeordnet. Diese Ausführungsvariante ist insbesondere beim Auftragsschweißen (Arc-Direct Energy Deposition) von Vorteil, da hier ein flächigerer Schweißbereich vor Luftzutritt geschützt wird.

Die Öffnungen aller Kanäle der Schleppgasdüse können in einer Ebene angeordnet sein, was sich für die Anwendung bei im Wesentlichen ebenen Schweißbereichen und Werkstücken besonders eignet.

Wenn die Öffnungen aller Kanäle der Schleppgasdüse auf einer gekrümmten Fläche angeordnet sind, kann ein optimaler Schutz des Schweißbereichs auch bei nicht ebenen Werkstücken, beispielsweise Rohren, Formrohren, Kesseln, etc. erzielt werden. Die Krümmung der Schleppgasdüse wird dabei an die Krümmung des Schweißbereichs bzw. Werkstücks entsprechend angepasst.

Die vorliegende Erfindung wird anhand der beigefügten Zeichnungen näher erläutert. Darin zeigen:
- Fig. 1: eine perspektivische Ansicht auf eine Ausführungsform einer im Wesentlichen rechteckigen Schleppgasdüse;
- Fig. 2: eine perspektivische Ansicht auf die Schleppgasdüse gemäß Fig. 1 von unten;
- Fig. 3: einen Schnitt durch ein Modul einer Schleppgasdüse;
- Fig. 4: eine schematische perspektivische Ansicht auf eine rechteckige Schleppgasdüse mit drei rechteckigen Sektoren;
- Fig. 5: ein Schnittbild durch die Schleppgasdüse gemäß Fig. 4 entlang der Schnittebene VI;
- Fig. 6: das Strömungsprofil des Fluids der Schleppgasdüse gemäß Fig. 5;
- Fig. 7: eine Draufsicht auf eine rechteckige Schleppgasdüse mit sechs symmetrisch angeordnete rechteckige Sektoren;
- Fig. 8: eine Draufsicht auf eine rechteckige Schleppgasdüse mit drei asymmetrisch angeordneten rechteckigen Sektoren;
- Fig. 9: eine Draufsicht auf eine rechteckige Schleppgasdüse mit zwei symmetrisch angeordneten rechteckigen Sektoren;
- Fig. 10: eine schematische Ansicht auf eine Schleppgasdüse mit sechs Sektoren gemäß Fig. 7, wobei die Strömungsparameter des Fluids jedes Sektors in Abhängigkeit der Geometrie der kurvenförmigen Schweißbahn geregelt werden;
- Fig. 11: eine schematische Ansicht auf eine Schleppgasdüse mit sechs Sektoren gemäß Fig. 7, wobei die Strömungsparameter des Fluids jedes Sektors in Abhängigkeit der Geometrie der geraden Schweißbahn geregelt werden;
- Fig. 12: eine schematische Ansicht auf eine Schleppgasdüse mit zwei Sektoren gemäß Fig. 9, wobei die Strömungsparameter des Fluids der Sektoren in Abhängigkeit der Geometrie der Schweißbahn geregelt werden;
- Fig. 13: eine Draufsicht auf eine runde Schleppgasdüse mit einer Vielzahl von Sektoren, welche modulartig aufgebaut und miteinander verbunden sind;
- Fig. 14: eine beispielhafte Temperatur-Zeit-Abkühlkurve für ein Werkstück während eines Schweißprozesses und eine geeignete Regelung der Fluidparameter oder Eigenschaften des Fluids der Schleppgasdüse; und
- Fig. 15A bis 15C: weitere beispielhafte Temperatur-Zeit-Abkühlkurven für ein Werkstück während eines Schweißprozesses mit drei unterschiedlichen Verläufen der Abkühlung.

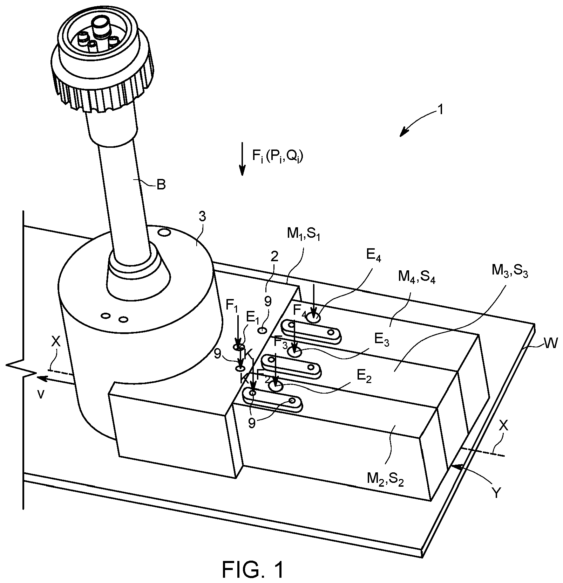

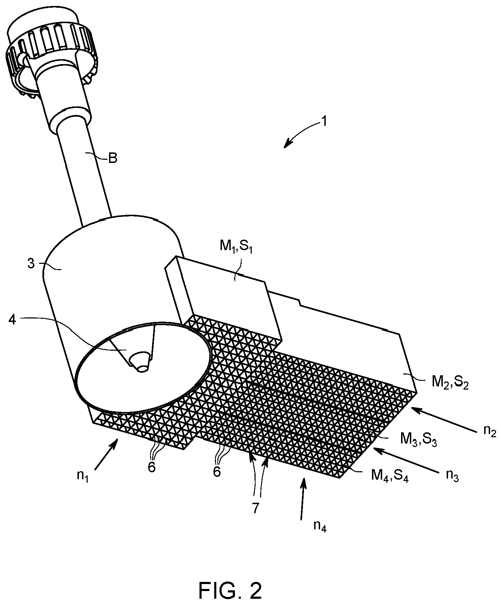

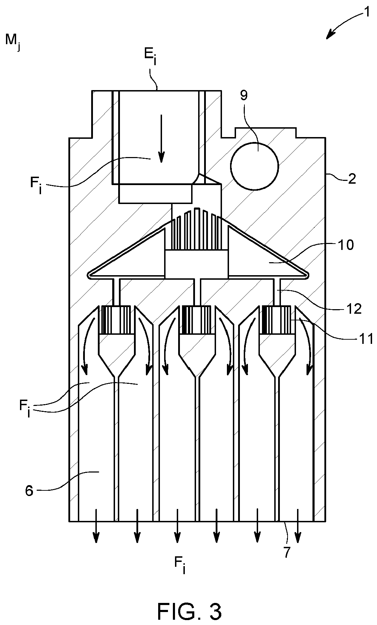

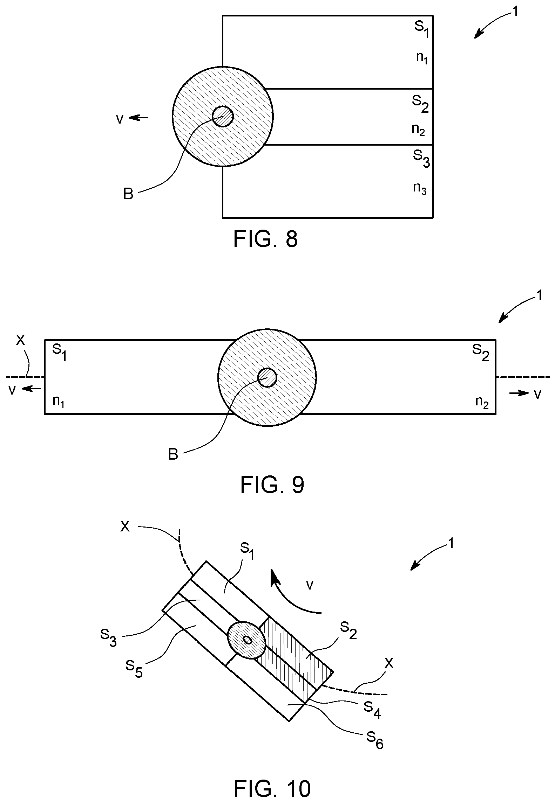

Fig. 1 zeigt eine perspektivische Ansicht auf eine bevorzugte Ausführungsform einer im Wesentlichen rechteckigen Schleppgasdüse 1 zur Beströmung eines Schweißbereichs Y eines Werkstücks W entlang einer Schweißbahn X mit zumindest einem Fluid Fᵢ, insbesondere ein Schutzgas oder eine Kühlflüssigkeit bzw. Mischungen eines Gases und einer Flüssigkeit. Die Schleppgasdüse 1 weist ein Gehäuse 2 und allenfalls eine Einrichtung zur Befestigung an einem Schweißbrenner B auf. Zur Vornahme einer schnellen Justierung der Schleppgasdüse 1 in Bezug auf den Schweißbrenner B kann die Einrichtung auch schwenkbar ausgebildet sein, um die Schleppgasdüse 1 aus der Gebrauchslage bringen zu können (nicht dargestellt). Dadurch kann beispielsweise in einer Schweißstartphase zur Qualitätskontrolle die Prozessstabilität beurteilt werden. Während des Schweißprozesses wird der nachlaufende Schweißbereich Y von der Schleppgasdüse 1 überdeckt, wodurch der Schweißbereich Y vor Luftzutritt geschützt und gekühlt wird, um eine optimale Qualität der Schweißnaht oder der Schweißfläche erzielen zu können. Die Länge der Schleppgasdüse 1 wird dabei so gewählt, dass bei gewünschter Schweißgeschwindigkeit v gewährleistet wird, dass der Schweißbereich Y so lange von dem zumindest einen Fluid Fᵢ beströmt wird, bis die kritische Temperatur Tₖ des Werkstücks W im Schweißbereich Y, bei der eine Reaktion mit Luftsauerstoff stattfindet, unterschritten ist. Die abgebildete Schleppgasdüse 1 weist einen Mantel 3 um die Gasdüse 4 des Schweißbrenners B auf, über welche das primäre Schutzgas zum Schutz des Lichtbogens während des Schweißprozesses zugeführt wird (siehe auch Fig. 2). An dem Mantel 3 ist ein Modul M₁ zur Bildung eines ersten Sektors S₁ angeordnet, welches wiederum mit drei weiteren Modulen M₂, M₃, M₄ zur Bildung der Sektoren S₂, S₃ und S₄ verbunden ist. Die Verbindung zwischen den Modulen Mⱼ kann beispielsweise durch eine lösbare Verbindung, also durch eine Verschraubung, Verrastung, ausgestaltet sein oder auch durch eine nicht lösbare Verbindung wie Schweißen, Löten, Kleben oder dgl. realisiert werden. Die Schleppgasdüse 1 kann modulartig erweitert werden, um eine beispielsweise durch Simulation oder Parameterkalkulation errechnete Form der Schleppgasdüse 1 zu erzielen (siehe auch Fig. 10 bis 12). Anstelle der miteinander verbundenen Module M₁ bis M₄ kann das Gehäuse 2 der Schleppgasdüse 1 auch einteilig hergestellt werden und es können die Sektoren S₁ bis S₄ auch in diesem gemeinsamen Gehäuse 2 integriert sein. Die Schleppgasdüse 1 weist zumindest einen Einlass Eᵢ für das zumindest eine Fluid Fᵢ auf, hier jeweils einen Einlass E₁ bis E₄ in jedem Modul M₁ bis M₄ für jeweils ein Fluid F₁ bis F₄. Über eine Vielzahl an vorzugsweise parallel angeordneten Kanälen 6 mit Öffnungen 7 wird das zumindest eine Fluid Fᵢ mit entsprechenden Strömungsparametern Pᵢ und Eigenschaften Qᵢ auf den Schweißbereich Y geströmt (siehe Fig. 3). Anstelle einer im Wesentlichen rechteckigen Form der Schleppgasdüse 1 in Draufsicht, kommen auch runde oder andere Formen in Frage. Die Schleppgasdüse 1 kann in den Modulen M₁ bis M₄ auch Kühlfluidleitungen 9 beinhalten, über welche zusätzlich zu dem zumindest einen Fluid Fᵢ auch ein Kühlfluid K auf den Schweißbereich Y aufgebracht werden kann.

Wie bereits erwähnt, kann die Schleppgasdüse 1 einteilig ausgeführt und bevorzugt in einem 3D-Druckverfahren hergestellt werden. Beispielsweise eignet sich dafür ein Lasersinterverfahren, bei dem das Material, insbesondere eine Aluminiumlegierung pulverförmig vorliegt und durch einen Laser aufgeschmolzen wird. Auf diese Weise kann die erfindungsgemäße Schleppgasdüse 1 besonders kostengünstig hergestellt werden und die Geometrie der einzelnen Elemente lässt sich dadurch leicht anpassen. Sämtliche Elemente der Schleppgasdüse 1, wie das Gehäuse 2, der zumindest eine Einlass Eᵢ für das zumindest eine Fluid Fᵢ, die Kanäle 6, und allenfalls ein Kühlfluidkanal 9 werden in einem Vorgang hergestellt.

Fig. 2 zeigt eine perspektivische Ansicht auf die Schleppgasdüse 1 gemäß Fig. 1 von unten. Dabei sind die Kanäle 6 mit den Öffnungen 7 in den Sektoren S₁ bis S₄ ersichtlich, welche hier quadratischen Querschnitt aufweisen. Das Verhältnis der Höhe des Kanals 6 zum hydraulischen Durchmesser wird vorzugsweise so gewählt, dass die Strömung innerhalb der Kanäle 6 entsprechend beruhigt wird und an den Öffnungen 7 der Kanäle 6 eine gleichmäßige, laminare Strömung des Fluids Fᵢ resultiert. Entsprechend der jeweiligen Anwendung wird die Größe der Schleppgasdüse 1 und auch die Anzahl nᵢ der Kanäle 6 in jedem Sektor Sᵢ gewählt.

Im dargestellten Ausführungsbeispiel der Schleppgasdüse 1 gemäß den Figuren 1 und 2 sind die Öffnungen 7 aller Kanäle 6 in einer Ebene angeordnet, was sich für eine Anwendung an einem im Wesentlichen ebenen Werkstück W besonders eignet. Alternativ dazu können die Öffnungen 7 der Kanäle 6 auch auf einer gekrümmten Fläche angeordnet sein. Dadurch kann die Form der Schleppgasdüse 1 an die Form des Werkstücks W angepasst werden. Beispielsweise beim Schweißen eines Rohres kann die Schleppgasdüse 1 konkav oder konvex gekrümmt ausgebildet sein, um eine Anpassung an die Außen- oder Innenfläche des Rohres erzielen zu können (nicht dargestellt). Dadurch wird der Schweißbereich Y optimal durch das Fluid Fᵢ geschützt und eine optimale Schweißqualität auch bei oxidationsempfindliche Materialien, wie insbesondere Titan, erzielt.

Fig. 3 zeigt einen Schnitt durch ein Modul Mⱼ einer Schleppgasdüse 1. Hieraus ist die Verbindung des Einlasses Eᵢ für das Fluid Fᵢ in einen Verteilraum 15 ersichtlich. Um das vom Einlass Eᵢ einströmende Fluid Fᵢ optimal im Gasverteilerraum 10 verteilen zu können, kann zusätzlich ein Element 11 zur Verteilung des Fluids Fᵢ im Gasverteilerraum 10 angeordnet sein. Vom Verteilraum 15 führen Löcher 12 in die parallelen Kanäle 6. Die Verteilung des Fluids Fᵢ kann auch in mehreren Stufen erfolgen, indem das Fluid Fᵢ über den Einlass Eᵢ in einen ersten Verteilraum 10 gelangt und über entsprechende Löcher 12 in einen zweiten Verteilraum oder mehrere zweite Gasverteilräume weitergeleitet wird, bevor das Fluid Fᵢ über entsprechende Löcher auf alle Kanäle 6 aufgeteilt wird (nicht dargestellt). Durch eine derartige Kaskadierung resultiert eine optimale und gleichmäßige Aufteilung des Fluids Fᵢ auf alle Kanäle 6 und somit eine gleichmäßige Strömung durch die Öffnungen 7 auf den zu schützenden und kühlenden Schweißbereich Y des Werkstücks W.

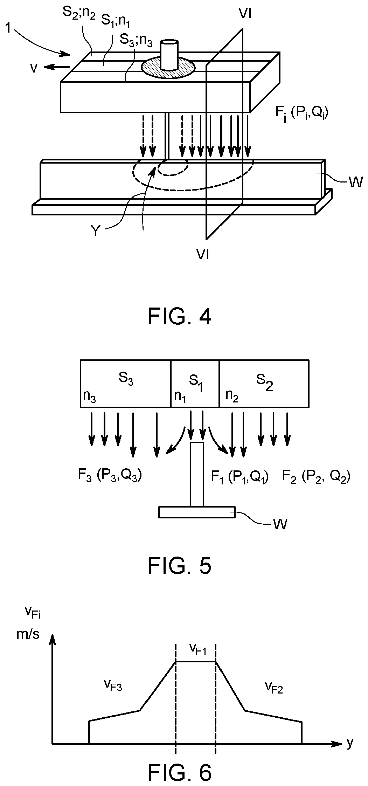

Fig. 4 zeigt eine schematische perspektivische Ansicht auf eine rechteckige Schleppgasdüse 1 und dem darunterliegenden Werkstück W, dessen Schweißbereich Y mit zumindest einem Fluid Fᵢ beströmt wird. Bei der dargestellten Schleppgasdüse 1 sind die Öffnungen 7 der Kanäle 6 für das Fluid Fᵢ in drei rechteckige Sektoren S₁, S₂ und S₃ aufgeteilt. Die Anzahl nᵢ der Kanäle 6 je Sektor Sᵢ kann gleich oder auch unterschiedlich sein. Erfindungsgemäß kann zumindest ein Strömungsparameter Pᵢ des zumindest einen Fluids Fᵢ jedes Sektors S₁, S₂ und S₃ individuell geregelt werden. Der Schweißprozess verläuft in Richtung der Längsausdehnung des Werkstücks W, was durch den Pfeil der Schweißgeschwindigkeit v gekennzeichnet ist.

In Fig. 5 ist ein Schnittbild durch die Schleppgasdüse 1 gemäß Fig. 4 mit den drei Sektoren S₁, S₂ und S₃ entlang der Schnittebene VI-VI dargestellt und darunter in Fig. 6 das Strömungsprofil des Fluids Fᵢ der Schleppgasdüse 1 gemäß Fig. 5. Das Strömungsprofil zeigt einen Strömungsparameter Pᵢ des Fluids Fᵢ, hier die Strömungsgeschwindigkeit v_{Fi} des Fluids Fᵢ in Querrichtung entlang der y-Achse. Entsprechend der erfindungsgemäßen Ausgestaltung der Schleppgasdüse 1 wird der Strömungsparameter Pᵢ, hier die Strömungsgeschwindigkeit v_{Fi} des verwendeten Fluid F₁, F₂, F₃ jedes Sektors S₁, S₂ und S₃ individuell geregelt. Die Sektoren S₁, S₂ und S₃ können natürlich individuell verschiedenartig ausgestaltet sein. Beispielsweise kann der Sektor S₁ mit einem Diffusor wie in Fig. 3 ausgestaltet sein, da hier eine besonders laminare Strömung erwünscht ist, um eine Oxidation am Werkstück W zu verhindern. Die Sektoren S₂ und S₃ dienen beispielsweise nur zur Kühlung und brauchen daher keinen Diffusor, da die Temperatur dort soweit abgekühlt ist, dass keine Oxidation mehr stattfindet. Somit können die Sektoren S₂, S₃ geometrisch einfacher und somit kostengünstiger hergestellt werden. Hier wird die Strömungsgeschwindigkeit v_{F1} des Fluids F₁ im ersten Sektor S₁ höher gewählt, als die Strömungsgeschwindigkeiten v_{F2}, v_{F3} der Fluide F₂, F₃ der Sektoren S₂ und S₃, welche vom zu schützenden und zu kühlenden Schweißbereich Y entlang der Schweißbahn X weiter entfernt sind, als der Sektor S₁. Die Regelung der Strömungsparameter Pᵢ der Fluide Fᵢ kann durch getrennte Einlässe E₁, E₂, E₃ für die Fluide F₁, F₂ und F₃ jedes Sektors S₁, S₂ und S₃ erfolgen. In diesem Fall könnte auch die Art des Fluids Fᵢ jedes Sektors Sᵢ individuell verändert werden und beispielsweise für Sektor S₁ ein anderes Fluid F₁ als für die Sektoren S₂ und S₃ oder eine andere Zusammensetzung der Fluide F₂ und F₃ verwendet werden. Ebenso kann die Schleppgasdüse 1 so konstruiert sein, dass sie nur einen Einlass E für ein Fluid F aufweist und der Einlass auf die Sektoren S₁, S₂ und S₃ aufgeteilt werden. Wenn nun jeder Sektor S₁, S₂ und S₃ über ein eigenes Ventil oder einen eigenen Durchflussregler (nicht dargestellt) für das Fluid F verfügt, kann der Strömungsparameter Pᵢ des Fluids F in jedem Sektor S₁, S₂ und S₃ individuell geregelt werden. Das erfindungsgemäße Verfahren zur Beströmung eines Schweißbereichs Y eines Werkstücks W mit einem Fluid Fᵢ und die erfindungsgemäße Ausgestaltung der Schleppgasdüse 1 ermöglicht eine individuelle Regelung der eingesetzten Fluide Fᵢ, wodurch bei optimaler Qualität des resultierenden Schweißergebnisses der Verbrauch der eingesetzten Fluide Fᵢ und somit die Kosten minimiert werden können.

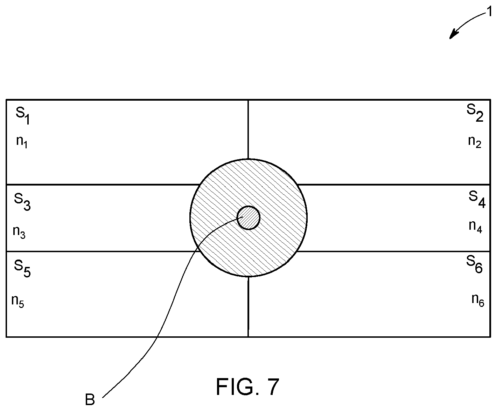

Fig. 7 zeigt eine Draufsicht auf eine rechteckige Schleppgasdüse 1 mit sechs symmetrisch angeordnete rechteckige Sektoren S₁ bis S₆. Der Einlass E für das Fluid F oder mehrere Einlässe E₁ für die Fluide Fᵢ sind nicht dargestellt. Der Schweißbrenner B ist in der Mitte der symmetrisch aufgebauten Schleppgasdüse 1 angeordnet. Unter der Voraussetzung von regelmäßig angeordneten Kanälen 6 in der hier dargestellten Schleppgasdüse 1 ist die Anzahl n₃ und n₄ der Kanäle 6 der Sektoren S₃ und S₄ geringer als die Anzahl n₁, n₂, n₅ und n₆ der Kanäle 6 der Sektoren S₁, S₂, S₅ und S₆. Die jeweilige Gestaltung der Schleppgasdüse 1 und Aufteilung der Sektoren Sᵢ wird an das herzustellende Werkstück W optimal angepasst. Dabei sind den Gestaltungsmöglichkeiten kaum Grenzen gesetzt.

In Fig. 8 ist die Draufsicht auf eine rechteckige Schleppgasdüse 1 mit drei asymmetrisch angeordneten rechteckigen Sektoren S₁, S₂ und S₃ dargestellt. Eine solche Ausgestaltung wird dann zweckmäßig sein, wenn die Schleppgasdüse 1 bzw. der Schweißbrenner B in der Regel in einer bevorzugten Schweißrichtung (siehe Pfeil der Schweißgeschwindigkeit v) über das Werkstück W bewegt wird, da immer der nach der Schweißung von der Schleppgasdüse 1 überdeckte Schweißbereich Y mit dem Fluid Fᵢ beströmt und geschützt und gekühlt werden muss.

Fig. 9 zeigt eine Draufsicht auf eine rechteckige Schleppgasdüse 1 mit zwei symmetrisch angeordneten rechteckigen Sektoren S₁ und S₂ mit jeweils einer entsprechenden Anzahl n₁ bzw. n₂ an Kanälen 6. Diese Ausführungsvariante der Schleppgasdüse 1 wird insbesondere für gerade Schweißbahnen X, welche in beiden Richtungen überstrichen werden, zweckmäßig sein.

Fig. 10 zeigt anhand einer schematischen Ansicht auf eine Schleppgasdüse 1 mit sechs Sektoren S₁ bis S₆ gemäß Fig. 7 die Regelung der Strömungsparameter Pᵢ des Fluids Fᵢ der Sektoren Sᵢ in Abhängigkeit der Geometrie eine kurvenförmigen Schweißbahn X. Bei Bewegung der Schleppgasdüse 1 während des Schweißprozesses entlang der Schweißbahn X in Richtung des Pfeiles der Schweißgeschwindigkeit v werden zweckmäßigerweise nur die Sektoren S₂ und S₄ angesteuert, also nur die Strömung der Fluide F₂ und F₄ in den Sektoren S₂ und S₄ aktiviert, da der frisch geschweißte Bereich aufgrund der Kurvenform der Schweißbahn X nur von diesen beiden Sektoren S₂ und S₄ überdeckt wird. Dadurch kann eine große Menge an Fluid Fᵢ, welches sonst auch über die anderen Sektoren S₁, S₃, S₅ und S₆ auf den Schweißbereich Y geströmt würde, eingespart werden.

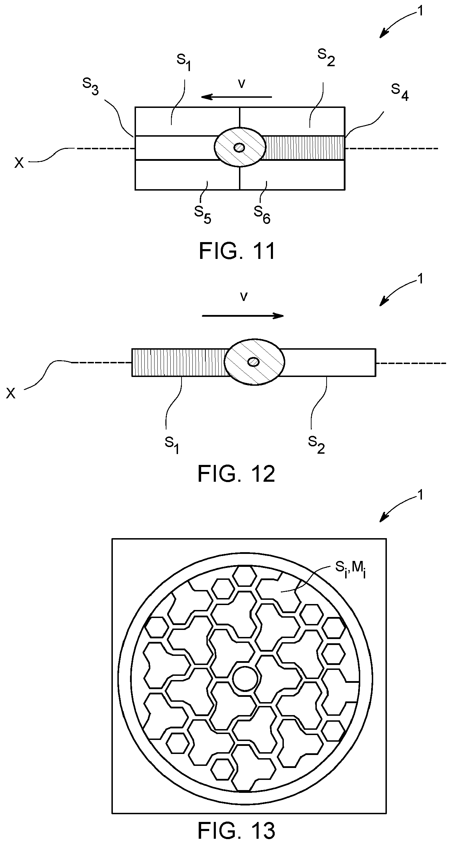

Fig. 11 zeigt eine schematische Ansicht auf eine Schleppgasdüse 1 mit sechs Sektoren S₁ bis S₆ gemäß Fig. 7. Bei Bewegung der Schleppgasdüse 1 während des Schweißprozesses entlang der im Wesentlichen geraden Schweißbahn X in Richtung des Pfeiles der Schweißgeschwindigkeit v wird zweckmäßigerweise nur der Sektor S₄ angesteuert, also nur die Strömung des Fluids F₄ in Sektor S₄ aktiviert, da der frisch geschweißte Bereich aufgrund der geraden Schweißbahn X nur von diesem Sektor S₄ überdeckt wird.

In Fig. 12 ist eine schematische Ansicht auf eine Schleppgasdüse 1 mit zwei Sektoren S₁, S₂ gemäß Fig. 9 beim Schweißen entlang einer geraden Schweißbahn X dargestellt. Bei Bewegung der Schleppgasdüse 1 während des Schweißprozesses in Richtung des Pfeiles der Schweißgeschwindigkeit v wird zweckmäßigerweise nur der Sektor S₁ angesteuert, also nur die Strömung des Fluids F₁ in Sektor S₁ aktiviert, da der frisch geschweißte Bereich aufgrund der geraden Schweißbahn X und der Schweißrichtung nur von diesem Sektor S₁ überdeckt wird.

Fig. 13 zeigt eine Draufsicht auf eine runde Schleppgasdüse 1 mit einer Vielzahl von Sektoren Sᵢ, welche modulartig aufgebaut und miteinander verbunden sind. Die einzelnen Module Mⱼ können verschiedene Gestalt aufweisen, wie hier einen im wesentlichen dreieckigen Grundriss besitzen. Dies ermöglicht eine individuelle Zusammensetzung der Schleppgasdüse 1 aus verschiedenen Modulen Mⱼ zur Bildung der gewünschten Sektoren Sᵢ.

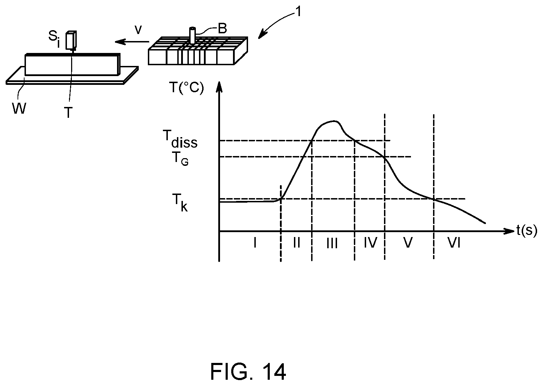

In Fig. 14 zeigt eine beispielhafte Temperatur-Zeit-Abkühlkurve, bei der die Temperatur T (in °C) an einer stationären Stelle am Werkstück W während des Schweißprozesses während dem der Schweißbrenner B mit der Schleppgasdüse 1 mit der Schweißgeschwindigkeit v über das Werkstück W bewegt wird, in Abhängigkeit der Zeit t (in s) dargestellt ist. Zu Beginn des Schweißprozesses während Phase I ist die Temperatur T unterhalb der für eine Oxidation relevanten kritischen Temperatur Tₖ angeordnet. In dieser Phase I erfolgt eine Kühlung des Schweißbereichs beispielsweise nur mit Druckluft. Es wird also während Phase I im entsprechenden Sektor Sᵢ der Schleppgasdüse 1, der sich gerade über der Stelle, an der die Temperatur T gemessen wird, befindet, Druckluft als Fluid Fᵢ verwendet. Während Phase II steigt die Temperatur T über die kritische Temperatur Tₖ an, weshalb für den Sektor Sᵢ, der sich über der Stelle der Messung der Temperatur T befindet, als Fluid beispielsweise Kohlendioxid CO₂ eingesetzt wird. Steigt die Temperatur T über die sogenannte Dissoziationstemperatur T_{diss}, erfolgt während der Phase III die Zugabe eines inerten Gases, z.B. von Argon, um die Schmelze während des Schweißprozesses vor Oxidation zu schützen. Nach Abfall der Temperatur unter die Dissoziationstemperatur T_{diss} während Phase IV kann wieder anstelle von Argon beispielsweise das billigere Kohlendioxid CO₂ eingesetzt werden. Bei Unterschreitung einer bestimmten Grenztemperatur T_{G} wird zusätzlich eine Flüssigkeit, beispielsweise Wasser, zur rascheren Abkühlung des Werkstücks eingesetzt (Phase V). Sinkt die gemessene Temperatur T schließlich unter die kritische Temperatur Tₖ, kann das Werkstück W wieder ausschließlich mit Druckluft beströmt werden (Phase VI). Fig. 14 zeigt nur die Regelung der Art des Fluids Fᵢ der Sektoren Sᵢ der Schleppgasdüse 1 in Abhängigkeit der an einer Stelle gemessenen Temperatur T. Bei Anordnung mehrerer Temperatursensoren können die Eigenschaften Qᵢ oder Strömungsparameter Pᵢ der Fluide Fᵢ für die Sektoren Sᵢ, welche sich gerade über der Stelle des jeweiligen Temperatursensors befinden, an die jeweilige gemessene Temperatur T angepasst werden bzw. die Temperaturverläufe durch Veränderung der Eigenschaften Qᵢ oder Strömungsparameter Pᵢ der Fluide Fᵢ für die Sektoren Sᵢ eingestellt und verändert werden. Somit kann das Temperatur-Zeit-Abkühlprofil auch an die Geometrie des Werkstücks W angepasst werden. Beispielsweise kann das Werkstück W am Rand weniger Material aufweisen, sodass die Wärmeeinbringung während des Schweißprozesses geringer ist und somit auch die Abkühlung nach dem Schweißprozess geringer ausfallen muss, während in der Mitte des Werkstücks W eine höhere Kühlleistung erforderlich sein wird.

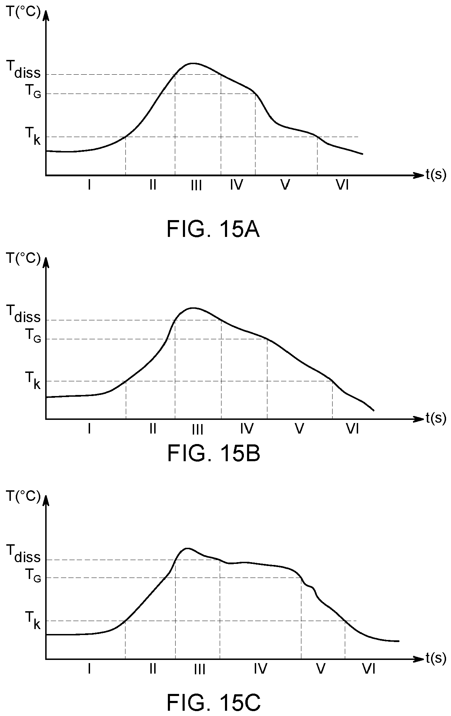

Schließlich zeigen die Fig. 15A bis 15C weitere beispielhafte Temperatur-Zeit-Abkühlkurven für ein Werkstück W während eines Schweißprozesses mit drei unterschiedlichen Abkühlverläufen ab Phase IV nach Unterschreitung der Dissoziationstemperatur T_{diss}.

Gemäß Figur 15A wird nach Abkühlung der Temperatur T unter die Dissoziationstemperatur T_{diss} in Phase IV eine sehr schnelle Abkühlung beispielsweise durch einen maximalen Volumenstrom des in dem jeweiligen Sektor Sᵢ der Schleppgasdüse 1 verwendeten Fluids Fᵢ, beispielsweise von Kohlendioxid CO₂, erzielt. Die Abkühlrate liegt beispielsweise zwischen 50°C/s und 1000°C/s, vorzugsweise zwischen 100°C/s und 500°C/s, je nach Geometrie des Werkstücks W und der Materialhäufung beim Herstellungsprozess. Während Phase V nach Unterschreitung einer Grenztemperatur T_{G} findet zu Beginn eine sehr rasche Abkühlung durch den Einsatz eines zusätzlichen, externen Kühlmediums in dem betreffenden Sektor Sᵢ statt. Im Laufe der Zeit t wird die Kühlleistung des externen Kühlmediums verringert, weshalb der Abfall der Kurve 1 während der Phase V flacher wird. In Phase VI nach Absinken der Temperatur T unter die kritische Temperatur Tₖ wird die Abkühlung beispielsweise durch die Steuerung des Volumenstroms eines zusätzlichen Kühlgases, wie zum Beispiel Luft, beeinflusst.

Bei Fig. 15B ist die Abkühlung in Phase IV durch einen geringeren Volumenstrom eines Schutzgases in dem jeweiligen Sektor Sᵢ gegenüber dem Temperaturverlauf gemäß Fig. 15A geringer. Somit ist die Dauer der Phase IV gegenüber Fig. 15A höher. In Phase V erfolgt beispielsweise durch konstante Beigabe eines externen Kühlmediums in dem jeweiligen Sektor Sᵢ ein im Wesentlichen konstanter Abfall der Temperatur T. In Phase VI wird beispielsweise die Abkühlung wieder durch die Steuerung des Volumenstroms von Luft beeinflusst.

Fig. 15C zeigt ein Temperatur-Zeit-Profil, bei dem in Phase IV die Abkühlung durch Reduktion des Volumenstroms des Schutzgases in dem jeweiligen Sektor Sᵢ verlangsamt stattfindet. Dadurch ist die Phase IV wesentlich länger als bei den Verläufen gemäß Fig. 15A und 15B. Nach Unterschreitung der Dissoziationstemperatur T_{diss} in Phase V findet gemäß Fig. 15C die Abkühlung mit steigendem Abfall durch Steigerung der Abkühlleistung durch ein externes Kühlmedium in dem jeweiligen Sektor Sᵢ statt. Nach Unterschreitung der kritischen Temperatur Tₖ in Phase VI findet dann wiederum eine Beeinflussung der Abkühlung durch die Steuerung des Volumenstroms eines zusätzlichen Kühlgases, beispielsweise Luft, statt. Die Fig. 15A bis 15C zeigen verschiedene Möglichkeiten einer Beeinflussung des Temperatur-Zeit-Abkühlprofils des Werkstücks W durch unterschiedliche Strömungsparameter Pᵢ oder Eigenschaften Qᵢ der eingesetzten Fluide Fᵢ in dem jeweiligen Sektor Sᵢ der Schleppgasdüse 1.

Durch die vorliegende Erfindung kann die Menge der eingesetzten Fluide Fᵢ minimiert und die Schweißqualität optimiert werden.

## Patentansprüche

1. Verfahren zur Beströmung eines Schweißbereichs (Y) eines Werkstücks (W) entlang einer Schweißbahn (X) mit zumindest einem Fluid (Fᵢ) während eines Schweißprozesses, wobei das zumindest eine Fluid (Fᵢ) über zumindest einen Einlass (Eᵢ) und eine Vielzahl von Kanälen (6) mit Öffnungen (7) auf den Schweißbereich (X) geströmt wird, **dadurch gekennzeichnet, dass** die Öffnungen (7) der Kanäle (6) in zumindest zwei Sektoren (Sᵢ) aufgeteilt werden, und zumindest ein Strömungsparameter (Pᵢ) des zumindest einen Fluids (Fᵢ) jedes Sektors (Sᵢ) individuell geregelt wird.

2. Verfahren nach Anspruch 1, **dadurch gekennzeichnet, dass** zumindest eine Eigenschaft (Qᵢ) des zumindest einen Fluids (Fᵢ) individuell geregelt wird.

3. Verfahren nach Anspruch 1 oder 2, **dadurch gekennzeichnet, dass** zumindest ein Strömungsparameter (Pᵢ) und bzw. oder zumindest eine Eigenschaft (Qᵢ) des zumindest einen Fluids (Fᵢ) jedes Sektors (Sᵢ) in Abhängigkeit zumindest einer Temperatur (Tₖ) des Schweißbereichs (Y) des Werkstücks (W) individuell geregelt wird.

4. Verfahren nach Anspruch 3, **dadurch gekennzeichnet, dass** die zumindest eine Temperatur (Tₖ) des Schweißbereichs (Y) des Werkstücks (W) mit zumindest einem Temperatursensor (8) gemessen wird, durch Simulation oder Parameterkalkulation abgeschätzt wird, und bzw. oder über die beim Schweißprozess in das Werkstück (W) eingebrachte Energie bestimmt wird.

5. Verfahren nach Anspruch 3 oder 4, **dadurch gekennzeichnet, dass** bei Unterschreitung oder Überschreitung einer vorgegebenen Grenztemperatur (T_{G}) zumindest ein Strömungsparameter (Pᵢ) und bzw. oder zumindest eine Eigenschaft (Qᵢ) des zumindest einen Fluids (Fᵢ) zumindest eines Sektors (Sᵢ) geändert wird.

6. Verfahren nach Anspruch 3 oder 4, **dadurch gekennzeichnet, dass** zumindest ein Strömungsparameter (Pᵢ) und bzw. oder zumindest eine Eigenschaft (Qᵢ) des zumindest einen Fluids (Fᵢ) jedes Sektors (Sᵢ) in Abhängigkeit eines vorgegebenem Temperatur-Zeit-Abkühlprofils des Werkstücks (W) individuell geregelt wird.

7. Verfahren nach einem der Ansprüche 1 bis 6, **dadurch gekennzeichnet, dass** zumindest ein Strömungsparameter (Pᵢ) und bzw. oder zumindest eine Eigenschaft (Qᵢ) zumindest eines Fluids (Fᵢ) zumindest eines Sektors (Sᵢ) in Abhängigkeit der Geometrie der Schweißbahn (X) und bzw. oder in Abhängigkeit der Geometrie des Werkstücks (W) geregelt wird.

8. Verfahren nach einem der Ansprüche 1 bis 7, **dadurch gekennzeichnet, dass** zumindest ein Strömungsparameter (Pᵢ) und bzw. oder zumindest eine Eigenschaft (Qᵢ) zumindest eines Fluids (Fᵢ) zumindest eines Sektors (Sᵢ) in Abhängigkeit des Schweißprozesses geregelt wird.

9. Schleppgasdüse (1) zur Beströmung eines Schweißbereichs (Y) eines Werkstücks (W) entlang einer Schweißbahn (X) mit zumindest einem Fluid (Fᵢ) während eines Schweißprozesses, mit einem Gehäuse (2), zumindest einem Einlass (Eᵢ) für das zumindest eine Fluid (Fᵢ) und eine Vielzahl von Kanälen (6) mit Öffnungen (7), über welche das zumindest eine Fluid (Fᵢ) auf den Schweißbereich (Y) strömt, **dadurch gekennzeichnet, dass** die Kanäle (6) mit den Öffnungen (7) in zumindest zwei Sektoren (Sᵢ) aufgeteilt sind, mit zumindest einem Einlass (Eᵢ) für zumindest ein Fluid (Fᵢ), welche Sektoren (Sᵢ) zur individuellen Regelung zumindest eines Strömungsparameters (Pᵢ) des zumindest einen Fluids (Fᵢ) jedes Sektors (Sᵢ) ausgebildet ist.

10. Schleppgasdüse (1) nach Anspruch 9, **dadurch gekennzeichnet, dass** die Sektoren (Sᵢ) in Form von miteinander verbindbaren Modulen (Mⱼ) aufgebaut sind.

11. Schleppgasdüse (1) nach Anspruch 9 oder 10, **dadurch gekennzeichnet, dass** zumindest ein Temperatursensor (8) zur Messung zumindest einer Temperatur (Tₖ) des Schweißbereichs (Y) des Werkstücks (W) vorgesehen ist.

12. Schleppgasdüse (1) nach einem der Ansprüche 9 bis 11, **dadurch gekennzeichnet, dass** zumindest eine Kühlfluidleitung (9) mit zumindest einer Mündung zum Aufbringen eines Kühlfluids (K) auf den Schweißbereich (Y) des Werkstücks (W) vorgesehen ist.

13. Schleppgasdüse (1) nach Anspruch 12, **dadurch gekennzeichnet, dass** an der zumindest einen Mündung eine Düse, insbesondere eine Zerstäuberdüse, angeordnet ist.

14. Schleppgasdüse (1) nach einem der Ansprüche 9 bis 13, **dadurch gekennzeichnet, dass** das Gehäuse (2), der zumindest eine Einlass (Eᵢ) für jedes Fluid (Fᵢ), die Kanäle (6) mit den Öffnungen (7) und allenfalls die zumindest eine Kühlfluidleitung (9) einteilig und vorzugsweise in einem 3D-Druckverfahren hergestellt sind.

15. Schleppgasdüse (1) nach einem der Ansprüche 9 bis 14, **dadurch gekennzeichnet, dass** die Kanäle (6) runden oder regelmäßig polygonen Querschnitt aufweisen.
